# EUROPÄISCHE PATENTANMELDUNG

(11) **EP 4 372 059 A1**
(43) Veröffentlichungstag der Anmeldung: **22.05.2024**
(21) Anmeldenummer: 23208430.1
(22) Anmeldetag: 08.11.2023
(51) Int. Cl.: C09D 5/00, C04B 18/00, C04B 30/00, C09D 5/02

(54) **HÄRTBARE ZUSAMMENSETZUNG ZUR HERSTELLUNG VON BESCHICHTUNGEN ZUR THERMISCHEN, ELEKTRISCHEN UND/ODER AKUSTISCHEN ISOLIERUNG**

(30) Priorität: 15.11.2022 EP 22207499
(71) Anmelder: Evonik Operations GmbH, 45128 Essen (DE)
(72) Erfinder: Lazar, Björn, 63594 Hasselroth (DE); Gerharz-Kalte, Bettina, 65597 Hünfelden (DE); Liebana Viñas, Sara, 45657 Recklinghausen (DE); Lygin, Alexander, 64347 Griesheim (DE)
(74) Vertreter: Evonik Patent Association

(57) **Zusammenfassung**

Die Erfindung betrifft eine härtbare Zusammensetzung zur Herstellung von Beschichtungen zur thermischen, elektrischen und/oder akustischen Isolierung enthaltend mindestens ein wässriges Bindemittel, wobei sie
- eine erste Komponente basierend auf sprühgetrocknete pyrogene Siliziumdioxidgranulate und
- mindestens eine zweite Komponente ausgewählt aus der Gruppe der Siliziumdioxide, bevorzugt Mikrosilica, Granulate auf Basis von pyrogen hergestelltem Siliciumdioxid, Silica-Aerogele, Silikatglas (Schaumglas / Blähglas), hohle Siliziumdioxidpartikel (Hohlglaskugeln), oder Granulate ausgewählt aus der Gruppe der Perlite, vorzugsweise expandierter Perlite, aus der Gruppe der Vermiculite und aus der Gruppe der Polymere, vorzugsweise expandierte Polystyrolgranulate, sowie deren Mischungen aufweist.

## Beschreibung

Die Erfindung betrifft eine härtbare Zusammensetzung zur Herstellung von Beschichtungen zur thermischen, elektrischen und/oder akustischen Isolierung, deren Herstellung und Verwendung sowie die daraus hergestellten Beschichtungen.

Beschichtungen werden auf Oberflächen bzw. Substraten zu dekorativen, funktionellen Zwecken oder zu Schutzzwecken aufgebracht. Sie verschönern, schützen und bewahren Materialien wie Holz, Metall oder Kunststoff. Demnach werden auf der einen Seite brillante und glatte Lackschichten gefordert, auf der anderen Seite eine geschlossene Lackschicht zur Sicherstellung der chemischen und mechanischen Beständigkeit, eine gewisse Gleitfähigkeit der Lacke oder eine besondere Haptik. Die Nachfrage nach Oberflächenschutz in unterschiedlichen Industriebereichen, wie Flugzeug, Automobil, Schienenfahrzeug, Schiffbau, Baubranche und Windenergie, nimmt stetig zu.

Eine Wärmedämmbeschichtung wird häufig zur Verhinderung der Wärmeübertragung und zur Energieeinsparung verwendet. Es gibt zwei Arten von Wärmedämmbeschichtungen: 1) eine Wärmedämmbeschichtung, die auf dem Prinzip der Wärmereflexion basiert; und 2) eine Wärmedämmbeschichtung, die auf der isolierenden Wirkung einer Beschichtung mit niedriger Wärmeleitfähigkeit basiert.

Eine wärmereflektierende Schicht wird normalerweise verwendet, um die durch Strahlung erzeugte Wärme zu verhindern. Hierbei werden beispielsweise wärmereflektierenden Farben für Gebäude verwendet. Die Farbe hilft, das Sonnenlicht zu reflektieren, um die in Gebäude einfallende Sonnenwärmestrahlung zu reduzieren. Die Wärmedämmbeschichtung, die auf der isolierenden Wirkung einer Beschichtung basiert, ist für Anwendungen vorgesehen, die eine Reduzierung oder Verhinderung der Wärmeübertragung erfordern.

Niedrige Wärmeleitzahlen weisen poröse Wärmedämmstoffe wie etwa Aerogele oder pyrogene oder gefällte Kieselsäuren auf. Pyrogene Kieselsäuren werden durch Flammenhydrolyse von flüchtigen Siliciumverbindungen, wie z.B. organischen und anorganischen Chlorsilanen, in einer Wasserstoff- und Sauerstoffflamme hergestellt.

Kieselsäure, Silica und Siliziumdioxid sind in der vorliegenden Erfindung als Synonyme zu verwenden.

WO 2006/097668 A1 beschreibt faserfreie mikroporöse Wärmeisolationsmaterialgranulate enthaltend pyrogene Siliziumdioxidgranulate und ein Trübungsmittel mit einer Partikelgröße von 0,25 mm - 2,5 mm.

WO2018/134275 offenbart ein granulares Material basierend auf pyrogene Siliziumdioxid und einem IR-Trübungsmittel mit verbesserter mechanischer Stabilität, welches nach einer thermischen Behandlung bei 950°C hergestellt wird. Das Material zeigt exzellente wärmeisolierende Wirkung auf, jedoch weisen die Granulate eine unregelmäßige Partikelform und eine breite Partikelgrößenverteilung auf.

WO2017036744A1 beschreibt Silica Formkörper mit niedrigem C-Gehalt, einer geringen Dichte, einem großen Porenvolumen und einer geringen thermischen Leitfähigkeit, wobei der Formkörper entweder aus einer feuchten Mischung enthaltend Silica, einen Binder und ein organisches Lösungsmittel durch Verdampfen des Lösungsmittels oder durch Pressen einer Mischung enthaltend Silica und ein Bindemittel entsteht. Die Silica-Granulate weisen unregelmäßige Formen und Partikelgrößen auf.

WO 2021/144170 beschreibt ein hydrophobes körniges Material auf Silicabasis mit erhöhter Polarität, wobei das Granulat einen mittleren Partikeldurchmesser (dso) von > 200 µm aufweist.

Diese aus dem Stand der Technik bekannten Granulate neigen jedoch in einer härtbaren Beschichtungszusammensetzung bei Lagerung zur Viskositätserhöhung, was zu schlechten Fließeigenschaften führen kann. Die Applikation kann somit erschwert sein und kann mit dem gänzlichen Verwerfen der Zusammensetzung zur Folge haben.

Darüber hinaus weisen die Oberfläche der mit den bekannten Granulaten hergestellten Beschichtungen keine schöne Haptik auf. Die Oberfläche erscheint nicht glatt und einheitlich, was nicht nur negativ auf die Ästhetik solcher Beschichtungen, sondern möglicherweise auch auf die funktionale Wirkung auswirken kann.

Die Aufgabe der vorliegenden Erfindung ist daher die Bereitstellung einer härtbaren Zusammensetzung zur Herstellung von Beschichtungen zur thermischen, elektrischen und/oder akustischen Isolierung, die eine verbesserte Lagerstabilität und daraus hergestellte Beschichtung eine zumindest gute oder verbesserte wärmeisolierende Wirkung aufweist. Es ist ebenso wünschenswert, eine Beschichtung mit einer verbesserten Oberflächenoptik zu erhalten.

Zur Lösung der Aufgabe wird eine härtbare Zusammensetzung der eingangs genannter Art vorgeschlagen, enthaltend mindestens ein wässriges Bindemittel,
- eine erste Komponente basierend auf sprühgetrocknete pyrogene Siliziumdioxidgranulate und
- mindestens eine zweite Komponente ausgewählt aus der Gruppe der Siliziumdioxide, bevorzugt Mikrosilica, Granulate auf Basis von pyrogen hergestelltem Siliciumdioxid, Silica-Aerogele, Silikatglas (Schaumglas / Blähglas), hohle Siliziumdioxidpartikel (Hohlglaskugeln), oder Granulate ausgewählt aus der Gruppe der Perlite, vorzugsweise expandierter Perlite, aus der Gruppe der Vermiculite und aus der Gruppe der Polymere, vorzugsweise expandierte Polystyrolgranulat, sowie deren Mischungen.

Überraschenderweise weisen die Beschichtungen, die mit der erfindungsgemäßen härtbaren Zusammensetzung hergestellt wurden, eine gute wärmeisolierende Wirkung auf.

Für die Erzielung der gewünschten Applikationseigenschaften ist das rheologische Verhalten der Beschichtungszusammensetzung von besonderer Wichtigkeit. Daher ist das Einstellen eines Rheologieprofils der Zusammensetzung besonders wichtig. Dieses Rheologieprofil wird durch das anzuwendende Auftragsverfahren/Applikation (z. B. Spritzen, Rollen, Walzen, Gießen, Streichen oder Druckverfahren) vorgegeben und durch die Wahl der Formulierung sichergestellt.

In der Regel wird das Rheologieprofil über einen breiten Bereich der Scherrate gemessen. Es ist bekannt, dass eine hohe Scherrate z. B. die Spritzneigung oder Streichbremse, Spritznebelbildung und eine niedrige Scherrate z. B. das Ablaufverhalten sowie den Lackverlauf widerspiegeln.

Jedoch verändert sich das zuvor eingestellte Rheologieprofil häufig während der Lagerung, so dass die Zusammensetzung für ein bestimmtes Auftragsverfahren nicht mehr geeignet ist. Diese Abweichung des Rheologieprofils wird durch die Messung der Viskosität einer Beschichtungszusammensetzung bei bestimmten Scherraten vor und nach Lagerung quantifiziert. In der Lackindustrie werden üblicherweise die Viskositätswerte vor (z. B. einen Tag nach Herstellung der Beschichtungszusammensetzung) und nach Lagerung (z.B. eine Woche nach Herstellung der Beschichtungszusammensetzung) bei den Scherraten von 50 UpM (Umdrehungen pro Minute), nach 0 Sekunden, 30 Sekunden und 60 Sekunden herangezogen, um eine Aussage über die Applikationseigenschaften der Beschichtungszusammensetzung zu treffen.

Vorzugsweise handelt es sich bei den erfindungsgemäßen Zusammensetzungen um Zubereitungen für verschiedene Anwendungsbereiche, die durch Auftragsverfahren wie z. B. Spritz-, Tauch-, Walz-, Gieß-, Rollen-, Sprüh- oder Streichapplikation sowie verschiedene Druckverfahren auf den zu beschichtenden Untergrund aufgebracht werden.

Unerwartet konnte festgestellt werden, dass die erfindungsgemäße härtbare Zusammensetzung eine verbesserte Lagerstabilität aufweist als bei Zusammensetzungen mit aus dem Stand der Technik bekannten Granulaten.

### Erste Komponente

Vorzugsweise weist die erste Komponente folgende physikalisch-chemische Kenndaten auf:
- Mittlerer Partikeldurchmesser (dso): 10 bis 200 µm,
- BET-Oberfläche: 20 bis 600 m²/g
- Stampfdichte: 250 - 700 g/l, erhältlich mittels Sprühtrocknung einer wässrigen pyrogen hergestelltes Siliziumdioxid.

Aus dem Stand der Technik sind derartige Granulate als erste Komponente bekannt. Zahlreiche Syntheseverfahren sind dem Fachmann bekannt, wie beispielsweise aus der Lehre der EP 0 725 037 A1 zu entnehmen ist. Diese Granulate finden bisher als Katalysatorträger Verwendung. Als wärmeisolierendes Material sind sie aufgrund ihrer relativ hohen Stampfdichte nicht interessant.

Unter dem Begriff "Granulat" wird in der vorliegenden Erfindung ein körniger, leicht schüttbarer, rieselfähiger Feststoff verstanden.

Stampfdichten verschiedener pulverförmiger oder grobkörniger granularer Materialien können nach DIN ISO 787-11 :1995 "Allgemeine Prüfverfahren für Pigmente und Füllstoffe - Teil 11: Bestimmung des Stampfvolumens und der Stampfdichte" bestimmt werden. Dabei wird die Fülldichte einer Schüttung nach dem Rütteln und Stampfen gemessen.

Eine mittlere Partikelgröße des erfindungsgemäßen Granulats kann nach lSO13320:2009 durch Laserbeugungs-Partikelgrößenanalyse bestimmt werden. Dabei wird aus der resultierenden gemessenen Partikelgrößenverteilung der Mittelwert d₅₀, der wiedergibt, welche Partikelgroße 50% aller Partikeln nicht übersteigt, als mittlere Partikelgröße definiert.

Das erfindungsgemäße Granulat kann eine BET Oberfläche von 20 bis 600 m²/g, besonders bevorzugt von 50 bis 400 m²/g, ganz besonders bevorzugt von 70 bis 350 m²/g. Die spezifische Oberfläche, auch vereinfacht BET Oberfläche genannt, wird nach DIN 9277:2014 durch Stickstoffadsorption nach dem Brunauer-Emmett-Teller-Verfahren bestimmt.

Bevorzugt weist die erste Komponente einen Porenvolumen von 0,5 - 2,5 ml/g (d < 4 µm), bestimmt mittels Hg-Porosimeter, auf.

Die Bestimmung des Hg-Porenvolumens (d < 4 µm) basiert auf der Quecksilber-Instrusion gemäß DIN 66133, wobei ein AutoPore V 9600 Vorrichtung der Firma Micomeritics verwendet wird. Das Verfahrensprinzip beruht auf der Messung des in einen porösen Feststoff eingepressten Quecksilbervolumens in Abhängigkeit von dem angewendeten Druck. Bevorzugt weist die erste Komponente eine Partikelgrößenverteilung (d₉₀-d₁₀/d₅₀) zwischen 0,6 - 2,5, vorzugsweise 0,8 - 2,0 auf.

Vorzugsweise kann die erste Komponente mit einem Oberflächenmodifizierungsmittel, ausgewählt aus der Gruppe der Organosilane, Silazane, azyklischen Polysiloxane, zyklischen Polysiloxane, oder Mischungen daraus, oberflächenmodifiziert sein.

### Zweite Komponente

Die erfindungsgemäße Zusammensetzung enthält als zweite Komponente ausgewählt aus der Gruppe bestehend aus Siliziumdioxide, bevorzugt Mikrosilica, Granulate auf Basis von pyrogen hergestelltem Siliciumdioxid, Silica-Aerogele, Silikatglas (Schaumglas / Blähglas), hohle Siliziumdioxidpartikel (Hohlglaskugeln), oder Granulate ausgewählt aus der Gruppe der Perlite, vorzugsweise expandierter Perlite, aus der Gruppe der Vermiculite und aus der Gruppe der Polymere, vorzugsweise expandierter Polystyrolgranulate, sowie deren Mischungen.

Bevorzugt weisen die Granulate eine mittlere Partikelgröße mit d₅₀ von 1µm bis 2 mm auf.

Generell können handelsübliche Produkte als zweite Komponente verwendet werden. Es seien hier einige zu nennen: Handelsübliches Silikatglaspartikel sind z. B. Poraver^{®} der Fa. Poraver GmbH; bekannte Perlite sind z.B. Tri-Spheres^{®} 350 und Tri-Spheres^{®} 400S der Fa. Lehmann & Voss & Co. KG; Enova^{®} Aerogel IC3100, IC3110 und IC3120 der Fa. Cabot Corporation.

Siliziumdioxid kann ein oder mehrere allgemein bekannten Typen von Kieselsäuren, wie die sogenannten Aerogele, Xerogele, Perlite, Fällungskieselsäuren, pyrogene Kieselsäuren beinhalten.

Bevorzugt enthält die erfindungsgemäße Zusammensetzung als zweite Komponente, bevorzugt ausgewählt aus der Gruppe der Granulate auf Basis von pyrogen hergestelltem Siliciumdioxid, wobei sie sich in mindestens einem physikalisch-chemischen Kenndaten von der ersten Komponente unterscheidet.

Pyrogene Kieselsäuren werden mittels Flammenhydrolyse oder Flammenoxidation hergestellt. Dabei werden hydrolysierbare oder oxidierbare Ausgangstoffe in der Regel in einer Wasserstoff-Sauerstoffflamme oxidiert, beziehungsweise hydrolysiert. Als Ausgangsstoffe für pyrogene Verfahren können organische und anorganische Stoffe eingesetzt werden. Besonders geeignet ist Siliziumtetrachlorid. Die so erhaltene hydrophile Kieselsäure ist amorph. Pyrogene Kieselsäuren liegen in der Regel in aggregierter Form vor. Unter "aggregiert" ist zu verstehen, dass sogenannte Primärpartikel, die bei der Genese zunächst entstehen, sich im weiteren Reaktionsverlauf fest miteinander unter Bildung eines dreidimensionalen Netzwerkes verbinden. Die Primärpartikel sind weitestgehend porenfrei und weisen auf ihrer Oberfläche freie Hydroxylgruppen auf.

Aus dem Stand der Technik sind derartige pyrogene Kieselsäuregranulate bekannt. Zahlreiche Syntheseverfahren sind dem Fachmann bekannt, wie beispielsweise aus der Lehre der WO2021/144170 zu entnehmen ist.

Vorzugsweise weisen derartige pyrogene Kieselsäuregranulate eine Stampfdichte von 80 g/l - 250 g/l, vorzugsweise 100 g/l - 250 g/l auf.

Bevorzugt weisen derartige pyrogene Kieselsäuregranulate einen mittleren Partikeldurchmesser (d₅₀) von > 200 µm, bevorzugt 250 µm - 1000 µm, auf.

Bevorzugt weisen derartige pyrogene Kieselsäuregranulate einen Porenvolumen von 2,0 - 4,0 ml/g (d< 4 µm), bestimmt mittels Hg-Porosimeter, auf.

Die erfindungsgemäße Zusammensetzung enthält hydrophobierte Granulate basierend auf pyrogenen Siliziumdioxidpartikel. Der Begriff "hydrophob" im Sinne der vorliegenden Erfindung bezieht sich auf die Partikel mit einer geringen Affinität zu polaren Medien wie Wasser. Die hydrophilen Partikeln weisen dagegen eine hohe Affinität zu polaren Medien wie Wasser auf. Die Hydrophobie der hydrophoben Materialien, auch Hydrophobizität genannt, kann üblicherweise durch die Aufbringung entsprechender unpolaren Gruppen an die Kieselsäureoberfläche erreicht werden. Das Ausmaß der Hydrophobizität einer hydrophoben Kieselsäure kann unter anderem durch ihre Methanolbenetzbarkeit bestimmt werden, wie beispielsweise in WO2011/076518 A1, Seiten 5-6, näher beschrieben. In reinem Wasser trennt sich eine hydrophobe Kieselsäure vollständig vom Wasser ab und schwimmt auf dessen Oberfläche, ohne sich mit dem Lösungsmittel zu benetzen. In reinem Methanol dagegen, verteilt sich eine hydrophobe Kieselsäure im ganzen Lösungsmittelvolumen, es findet eine vollständige Benetzung statt. Bei der Messung der Methanolbenetzbarkeit wird ein maximaler Gehalt an Methanol in einem Methanol-Wasser Testgemisch bestimmt, bei dem noch keine Benetzung der Kieselsäure stattfindet, also 100% der eingesetzten Kieselsäure sich nach dem Kontakt mit dem Testgemisch von dem Testgemisch separiert, nicht benetzt bleibt. Dieser Gehalt an Methanol in dem Methanol-Wasser Gemisch in 5 Vol.%-Schritten wird Methanolbenetzbarkeit genannt. Je höher eine solche Methanolbenetzbarkeit, desto hydrophober ist die Kieselsäure. Je niedriger die Methanolbenetzbarkeit, desto geringer ist die Hydrophobie und desto höher ist die Hydrophilie des Materials.

Vorzugsweise beträgt die Methanolbenetzbarkeit der zweiten Komponente ausgewählt aus der Gruppe der Granulate auf Basis von pyrogen hergestelltem Siliciumdioxid größer als 50 Vol.% Methanol, bevorzugt > 55 Vol.% Methanol.

Vorzugsweise beträgt die Methanolbenetzbarkeit der ersten Komponente größer als 50 Vol.% Methanol.

Vorzugsweise beträgt der Kohlenstoffgehalt der zweiten Komponente ausgewählt aus der Gruppe der Granulate auf Basis von pyrogen hergestelltem Siliciumdioxid 0,5 Gew.-% - 10 Gew.-%.

Vorzugsweise kann die zweite Komponente mit einem Oberflächenmodifizierungsmittel, ausgewählt aus der Gruppe der Organosilane, Silazane, azyklischen Polysiloxane, zyklischen Polysiloxane, oder Mischungen daraus, oberflächenmodifiziert sein.

Bevorzugt beträgt der Kohlenstoffgehalt der ersten Komponente 0,5 Gew.-% - 10 Gew.-%.

Bevorzugt beträgt das Gewichtsverhältnis der ersten Komponente zu der zweiten Komponente von 1 : 10 bis 10 : 1, bevorzugt 1 : 8 bis 8 : 1, besonders bevorzugt 1 : 4 bis 4: 1.

Vorzugsweise weist die erfindungsgemäße Zusammensetzung ein Bindemittel ausgewählt aus der Gruppe bestehend aus (Meth)acrylate, Alkydharze, Epoxidharze, Gummi Arabicum, Kasein, Pflanzenöle, Polyurethane, Silikonharze, organomodifizierte Silikonhybridharze, Wachs, Polyester, Vinylharze, Cellulosederivate, Kieselsol, Wasserglas und Mischungen davon auf.

Gegebenenfalls enthält die erfindungsgemäße Zusammensetzung bevorzugt des Weiteren Filmbildemittel, Pigmente, Füllstoffe, Verdickungsmittel, Fasern, Dispergiermittel, Netzmittel, Konservierungsmittel, Emulgatoren, Schutzkolloide und/oder Entschäumer.

Ein weiterer Gegenstand der Erfindung ist ein Verfahren zur Herstellung einer härtbaren Zusammensetzung, die zur Herstellung von Beschichtungen zur thermischen oder akustischen Isolierung geeignet ist, bei dem eine Mischung hergestellt wird, enthaltend
- mindestens ein wässriges Bindemittel,
- eine erste Komponente basierend auf sprühgetrocknete pyrogene Siliziumdioxidgranulate,
- mindestens eine zweite Komponente ausgewählt aus der Gruppe der Siliziumdioxide, bevorzugt Mikrosilica, Granulate auf Basis von pyrogen hergestelltem Siliciumdioxid, Silica-Aerogele, Silikatglas (Schaumglas / Blähglas), hohle Siliziumdioxidpartikel (Hohlglaskugeln), oder Granulate ausgewählt aus der Gruppe der Perlite, vorzugsweise expandierter Perlite, aus der Gruppe der Vermiculite und aus der Gruppe der Polymere, vorzugsweise expandierter Polystyrolgranulate, sowie deren Mischungen,
- optional der Mischung anschließend noch Filmbildemittel, Pigmente, Füllstoffe, Verdickungsmittel, Faser, Schutzkolloide, Dispergiermittel, Netzmittel, Konservierungsmittel und/oder Entschäumer zugesetzt werden können.

Es kann von Vorteil sein, wenn die erste Komponente vor der zweiten Komponente in das wässrige Bindemittel vermischt wird.

Das Verfahren gemäß der Erfindung kann beispielsweise in einer Mischvorrichtung ausgeführt werden. Als eine solche Mischvorrichtung zur Herstellung der erfindungsgemäßen

Zusammensetzung eignet sich jede Vorrichtung, die in der Lage ist, eine einfache und schonende Einarbeitung des pulverförmigen oder granulären Siliziumdioxids mit der wässerigen Phase zu ermöglichen. In der Lackindustrie werden hierzu üblicherweise die sogenannten Rührer verwendet, deren relativ einfacher Aufbau eine wartungsarme und leicht zu reinigende Produktionsweise ermöglicht.

Das Verfahren der vorliegenden Erfindung wird bevorzugt bei einer Rührgeschwindigkeit von über 200 UpM (Umdrehungen pro Minute), bevorzugt von 400 bis 5000 UpM, besonders bevorzugt von 600 bis 3000 UpM durchgeführt.

Bevorzugt können für das erfindungsgemäße Verfahren als erste Komponente sprühgetrocknete pyrogene Siliziumdioxidgranulate mit den oben beschriebenen physikalisch-chemischen Kenndaten eingesetzt werden.

Bevorzugt können für das erfindungsgemäße Verfahren als zweite Komponente Granulate auf Basis von pyrogen hergestelltem Siliciumdioxid mit den oben beschriebenen physikalisch-chemische Kenndaten eingesetzt werden.

Für das erfindungsgemäße Verfahren beträgt das Gewichtsverhältnis der ersten Komponente zu der zweiten Komponente 1 : 10 bis 10 : 1, bevorzugt 1 : 8 bis 8 : 1, besonders bevorzugt 1 : 4 bis 4: 1, beträgt.

Auch Gegenstand der Erfindung ist die Verwendung der ersten Komponente als Zusatzstoff in Zusammensetzungen zur Herstellung von Beschichtungen zur thermischen, elektrischen oder akustischen Isolierung. Erstmalig konnte überraschend dargelegt werden, dass die erfindungsgemäße Verwendung der ersten Komponente für die Herstellung von Beschichtungen für thermische, elektrische und/oder akustische Isolierung sich eignet, die eine glatte Beschichtungsoberfläche aufweist, was für manche Anwendungsbereiche interessant sein dürfte.

Entsprechend sind Beschichtungen, Lacke, Farben, Tinten, Überzüge, Dichtungsmassen, Klebstoffe erhältlich durch Verwendung der erfindungsgemäßen Zusammensetzung auch erfindungsgemäß.

Völlig überraschend konnte festgestellt werden, dass durch die Kombination der beiden Komponenten, wobei die zweite Komponente sich in mindestens einer physikalisch-chemischen Kennzahl von der ersten Komponente unterscheidet, Synergie-Effekte aufzeigen, wie etwa eine bessere Lagerstabilität der erfindungsgemäßen Zusammensetzung und/oder eine verbesserte thermische, elektrische und/oder akustische Isolierung der daraus hergestellten Beschichtung. Zudem weist Beschichtungsoberfläche eine glatte Haptik auf.

Des Weiteren konnte unerwartet einen weiteren technischen Effekt in den Beispielen gezeigt werden. Es ist nämlich möglich, die erfindungsgemäße Zusammensetzung mit Granulaten höher zu beladen, um die Wärmeleitfähigkeit der mit der erfindungsgemäßen härtbaren Zusammensetzung hergestellten Beschichtung weiter zu senken, ohne dass die Lagerstabilität der erfindungsgemäßen Zusammensetzung nennenswert reduziert wird.

Darüber hinaus ermöglicht die Erfindung eine flexible Einsatzbarkeit, ganz nach den Bedürfnissen des Anwenders. So ist es vorstellbar, dass es nicht immer auf die höchste thermische, elektrische und/oder akustische Isolierung ankommt, sondern auch auf die optische Erscheinung der Beschichtung. Der Anwender kann beispielsweise nach Belieben diese Eigenschaften einstellen bzw. "justieren".

Die folgenden Beispiele dienen dem Fachmann allein zur Erläuterung dieser Erfindung und stellen keinerlei Beschränkung der beanspruchten Verwendung dar.

### Methoden

Die **Stampfdichte** [g/l] wurde gemäß DIN ISO 787-11:1995 bestimmt.

Die spezifische BET- Oberfläche [m²/g] wurde gemäß DIN 9277:2014 durch Stickstoffadsorption nach dem Brunauer-Emmett-Teller-Verfahren.

**Die Methanolbenetzbarkeit** [vol % Methanol in Methanol/Wasser-Mischung] wurde bestimmt nach einer Methode beschrieben in WO2011/076518 A1, Seite 5 - 6.

**Der Kohlenstoffgehalt** [Gew.-%] wurde bestimmt gemäß EN lSO3262-20:2000 (Chapter 8) durch Elementanalyse mit dem Kohlenstoffbestimmungssystem C632 (Hersteller: LECO). Die analysierte Probe wurde in einen Keramiktiegel gewogen, mit Verbrennungsadditiven versehen und in einem Induktionsofen unter Sauerstoffstrom erhitzt. Der vorhandene Kohlenstoff wird zu CO2 oxidiert. Die Menge an CO2-Gas wird durch Infrarotdetektoren (IR) quantifiziert. SiC, sofern vorhanden, wird nicht verbrannt und hat daher keinen Einfluss auf den Wert des Kohlenstoffgehalts.

Die Bestimmung des **Hg-Porenvolumens (d < 4 µm)** basiert auf der Quecksilber-Instrusion gemäß DIN 66133, wobei eine AutoPore V 9600 Vorrichtung der Firma Micomeritics verwendet wird. Das Verfahrensprinzip beruht auf der Messung des in einen porösen Feststoff eingepressten Quecksilbervolumens in Abhängigkeit von dem angewendeten Druck.

Die **Wärmeleitfähigkeit [in mW/(m*K)]** wurde nach EN 12667:2001 nach dem Verfahren mit der Guarded Hot Plate (GHP) gemessen.

Die **Viskosität** der Zusammensetzung wurde mit dem Rotationsviskosimeter Brookfield DV2T Extra bestimmt. Spindeln und Drehzahl wurden entsprechend dem im Handbuch angegebenen Viskositätsbereich ausgewählt. (Industrie-Standard)

### Applikation

Die erfindungsgemäßen Zusammensetzungen sowie Vergleichszusammensetzung wurden innerhalb von 24 Stunden nach Herstellung mit Hilfe einer Sprühpistole auf 15 cm x 15 cm x 0,3 cm handelsübliche Aluminiumbleche appliziert. Die Schichtdicke eines Sprühvorgangs beträgt je nach Füllgrad und Viskosität zwischen 1 - 2 mm.

Sie wurden anschließend bei Raumtemperatur für ca. 24 Stunden getrocknet und die Restfeuchte unter täglicher Gewichtsverlustkontrolle bei 60°C im Ofen entfernt. Bei konstantem Gewicht zwischen 2 Wiegungen wurde der Trocknungsvorgang abgebrochen; i.d.R. dauert dies maximal 1 Woche.

Die ausgehärteten beschichteten Alu-Bleche werden zur optischen Beurteilung herangezogen. Für die Bestimmung der Wärmleitfähigkeit sind Schichtdicken über 1 cm notwendig. Dafür werden die Bleche mehrfach besprüht und getrocknet. Die Oberfläche der Beschichtung wird zur Kontaktierung im Messgerät planparallel zur Unterseite des Aluminiumblechs gefräst.

### Optische Beurteilung der Beschichtungsoberfläche

Für die visuelle Beurteilung der Beschichtungsoberfläche wurden Bildaufnahmen angefertigt.

### Beispiele

### 1. Bestimmung der Wärmeleitfähigkeit der ersten und zweiten Komponente

### 1.1 Erste Komponente

Es wurden sprühgetrocknete pyrogene Siliziumgranulate gemäß Beispiel 8 der EP 0 725 037 hergestellt.

### 1.2 Zweite Komponente

Es wurden Granulate basierend auf pyrogenen Siliziumdioxid gemäß Beispiel 2 der WO 2021/144170 hergestellt.

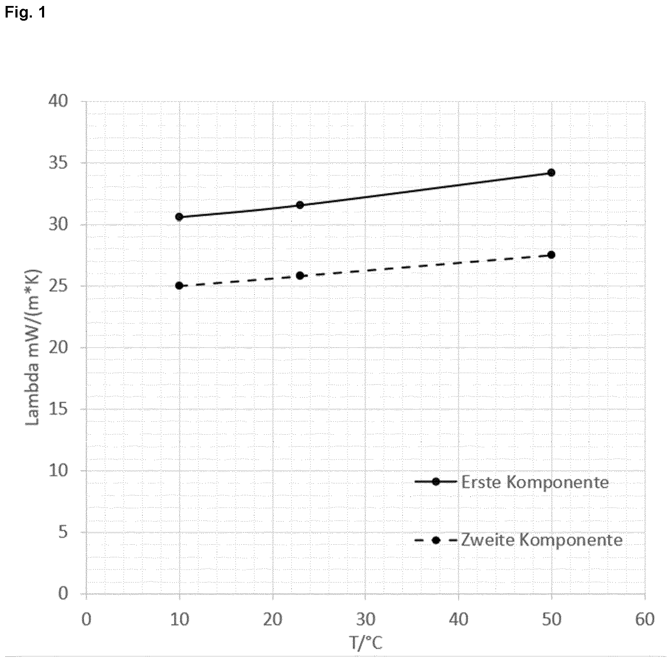

Fig. 1 zeigt jeweils die Wärmeleitfähigkeit der beiden Komponente. Die zweite Komponente weist eine niedrige Wärmeleitfähigkeit auf als die erste Komponente und hat daher eine bessere wärmeisolierende Eigenschaft. Dem Fachmann ist bekannt, dass die erste Komponente als Katalysatorträger verwendet wurde.

### 2. Bestimmung der Viskositätsveränderung während der Lagerung

Die erfindungsgemäßen Zusammensetzungen Z1, Z2, Z3 und Z4 und die Vergleichszusammensetzung VZ1 wurden gemäß den Angaben aus Tabelle 1 hergestellt. Als Vergleichsbeispiel wurde die zweite Komponente verwendet, da sie eine höhere wärmeisolierende Eigenschaft aufweisen als die der ersten Komponente (siehe Fig. 1)

Die Zusammensetzungen wurden wie folgt angefertigt. Im ersten Schritt wurden die Fasern, Kelco-vis und Wasser in einer laborüblichen Mischapparatur bestehend aus Rührgefäß und Laborrührwerk mit Propellerührer intensiv vermischt. Hier empfiehlt es sich eine Vormischung für mehrere Versuche anzusetzen und die Menge für jeden Ansatz von dieser zu entnehmen gemäß Tabelle 1. Anschließend wurde der Binder hinzugegeben und dieser mit der Vormischung miteinander vermischt. Im letzten Schritt wurden die Granulate schrittweise hinzugegeben und dabei bevorzugt mit der ersten Komponente begonnen. Die Rührergeschwindigkeit wurde mit zunehmender Partikelbeladung erhöht, so dass immer ein ausgebildeter Vortex für eine sanfte, aber intensive Durchmischung vorlag. Maximal wurden 1200 UpM bei maximaler Beladung verwendet.

**Tabelle 1: Zusammensetzungen in Gew.-%**

| | **VZ1** | **Z1** | **Z2** | **Z3** | **Z4** |
|---|---|---|---|---|---|
| Mowilith^{®} LDM 6119 Binder, Fa. Celanese Corporation | 48,54 | 48,54 | 48,54 | 48,54 | 47,36 |
| Wasser | 25,01 | 25,01 | 25,01 | 25,01 | 24,4 |
| Erste Komponente | 0,0 | 2,57 | 5,15 | 7,72 | 5,51 |
| Zweite Komponente | 25,74 | 23,17 | 20,59 | 18,02 | 22,03 |
| Lapinus CF50 Fasern, Fa. Rockwoll | 0,66 | 0,66 | 0,66 | 0,66 | 0,65 |
| Kelco-vis DG Biopolymer, Fa. CP Kelco US Inc. | 0,05 | 0,05 | 0,05 | 0,05 | 0,05 |

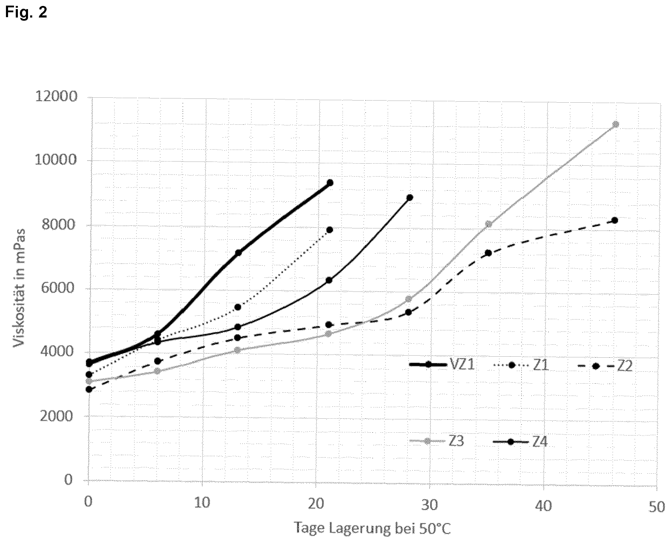

Die Viskosität der hergestellten Zusammensetzungen wurde über 46 Tage bestimmt. Die Proben wurden zwischen den Messungen luftdicht verschlossen und in einem Ofen bei 50°C gelagert, um eine beschleunigte Alterung der Proben zu simulieren. Die Ergebnisse sind graphisch in Fig. 2 dargestellt.

Fig. 2 zeigt, dass alle Viskositäten der erfindungsgemäßen Zusammensetzungen sich erst nach längerer Lagerung zu höheren Werten hin entwickeln, die z.B. eine Sprühbeschichtung nicht mehr erlauben würden. Z. B. werden 8000 mPa*s bei diesen Zusammensetzungen erst zwischen 21 - 42 Tagen erreicht. Im Gegensatz dazu zeigt VZ1 eine Viskositätserhöhung auf 8000 mPa*s bereits nach ca. 16 Tagen.

### 3. Bestimmung der Wärmeleitfähigkeit der erfindungsgemäßen Beschichtungen

Es wurden gemäß den Angaben aus Tabelle 2 erfindungsgemäße Zusammensetzung Z5 und Vergleichszusammensetzung VZ2 hergestellt und für die Bestimmung der Wärmeleitfähigkeit vorbereitet, siehe Applikation.

In beiden Fällen wurden die Zusammensetzungen maximal mit Granulaten beladen, so dass eine Sprühbeschichtung noch möglich war. Es zeigte sich, dass die Kombination beider Komponenten in Z5 mit in Summe 32,51 Gew.-% einen höheren Anteil Granulate zugelassen hat als die Vergleichszusammensetzung VZ2 mit nur 28,65 Gew.-%.

**Tabelle 2: Zusammensetzungen in Gew.-%**

| | **Z5** | **VZ2** |
|---|---|---|
| Mowilith LDM 6119, Fa. Celanese Corp. | 43,11 | 45,58 |
| Kelco-vis DG Biopolymer, Fa. CP Kelco US Inc. | 0,04 | 0,04 |
| Wasser | 23,76 | 25,12 |
| Lapinus CF50 Fasern, Fa. Rockwoll | 0,58 | 0,61 |
| Zweite Komponente | 26,01 | 28,65 |
| Erste Komponente | 6,5 | 0,0 |

Unerwartet konnte gezeigt werden, dass die erfindungsgemäße Beschichtung aus Zusammensetzung Z5 nach Trocknung bei einer mittleren Messtemperatur von 23°C eine geringere thermische Wärmeleitfähigkeit in Höhe von 44,4 mW/(m*K) aufweist als die Vergleichsbeschichtung VZ2 in Höhe von 48,8 mW/(m*K), was zu einer verbesserten wärmeisolierenden Wirkung führt.

### 4. Visuelle Beurteilung der Beschichtungen

Es wurden erfindungsgemäße Zusammensetzungen Z5, Z6 und Vergleichsbeispiel VZ2 gemäß Tabelle 3 hergestellt und gemäß oben beschriebenen Vorgaben appliziert und getrocknet.

**Tabelle 3: Zusammensetzungen in Gew.-%**

| | **Z5** | **Z6** | **VZ2** |
|---|---|---|---|
| Mowilith LDM 6119, Fa. Celanese Corp. | 43,11 | 39,72 | 45,58 |
| Kelco-vis DG Biopolymer, Fa. CP Kelco US Inc. | 0,04 | 0,04 | 0,04 |
| Wasser | 23,76 | 21,88 | 25,12 |
| Lapinus CF50 Fasern, Fa. Rockwoll | 0,58 | 0,53 | 0,61 |
| Zweite Komponente | 26,01 | 0,0 | 28,65 |
| Erste Komponente | 6,5 | 37,83 | 0,0 |

Fig. 3 zeigt eine Bildaufnahme der Beschichtungsoberfläche von VZ2.

Fig. 4 zeigt eine Bildaufnahme der Beschichtungsoberfläche von Z5.

Fig. 5 zeigt eine Bildaufnahme der Beschichtungsoberfläche von Z6.

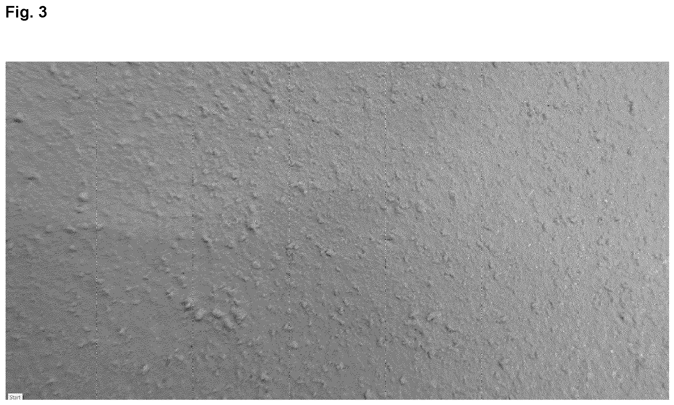

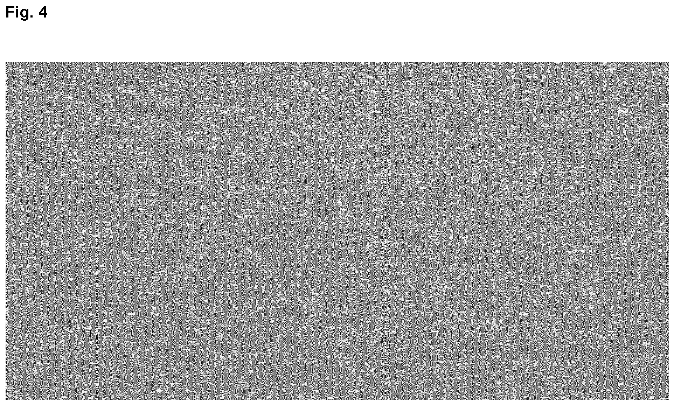

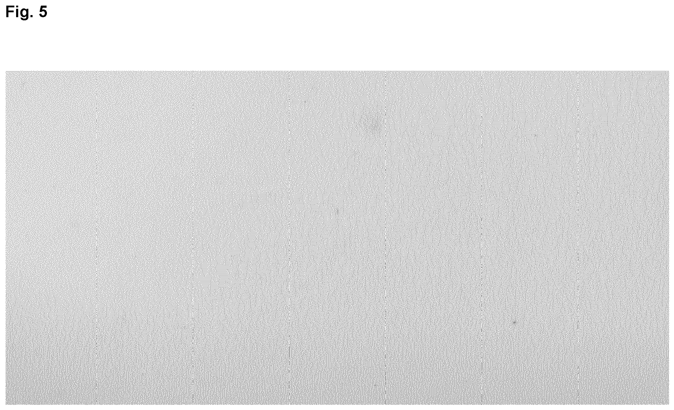

Die Bilder zeigen deutlich, dass die sehr raue Oberfläche von VZ2 (Fig. 3) durch Hinzugabe der ersten Komponente deutlich glatter wird (Z5 in Fig. 4). Oberflächen mit ausschließlich der ersten Komponente sind sehr glatt und weisen kaum Unebenheiten auf (Z6 in Fig. 5), deren thermische Wärmeleitfähigkeit lag bei 51,5 mW/(m*K).

## Patentansprüche

1. Härtbare Zusammensetzung zur Herstellung von Beschichtungen zur thermischen, elektrischen und/oder akustischen Isolierung enthaltend mindestens ein wässriges Bindemittel, **dadurch gekennzeichnet, dass** sie
- eine erste Komponente basierend auf sprühgetrocknete pyrogene Siliziumdioxidgranulate und
- mindestens eine zweite Komponente ausgewählt aus der Gruppe der Siliziumdioxide, bevorzugt Mikrosilica, Granulate auf Basis von pyrogen hergestelltem Siliciumdioxid, Silica-Aerogele, Silikatglas (Schaumglas / Blähglas), hohle Siliziumdioxidpartikel (Hohlglaskugeln), oder Granulate ausgewählt aus der Gruppe der Perlite, vorzugsweise expandierter Perlite, aus der Gruppe der Vermiculite und aus der Gruppe der Polymere, vorzugsweise expandierte Polystyrolgranulate, sowie deren Mischungen aufweist.

2. Zusammensetzung nach Anspruch 1, **dadurch gekennzeichnet, dass** die erste Komponente folgende physikalisch-chemische Kenndaten aufweist:
- Mittlerer Partikeldurchmesser (dso): 10 bis 200 µm,
- BET-Oberfläche: 20 bis 600 m²/g
- Stampfdichte: 250 - 700 g/l, erhältlich mittels Sprühtrocknung einer wässrigen pyrogen hergestelltes Siliziumdioxid.

3. Zusammensetzung nach einem der Ansprüche 1 oder 2, **dadurch gekennzeichnet, dass** die erste Komponente einen Porenvolumen von 0,5 - 2,5 ml/g (d < 4 µm), bestimmt mittels der Hg-Porosimeter, aufweist.

4. Zusammensetzung nach einem der vorgenannten Ansprüche, **dadurch gekennzeichnet, dass** die erste Komponente eine Partikelgrößenverteilung (d₉₀-d₁₀/d₅₀) zwischen 0,6 - 2,5, vorzugsweise 0,8 - 2,0 aufweist.

5. Zusammensetzung nach einem der vorgenannten Ansprüche, **dadurch gekennzeichnet, dass** die erste Komponente mit einem Oberflächenmodifizierungsmittel, ausgewählt aus der Gruppe der Organosilane, Silazane, azyklischen Polysiloxane, zyklischen Polysiloxane, oder Mischungen daraus, oberflächenmodifiziert ist.

6. Zusammensetzung nach einem der vorgenannten Ansprüche, **dadurch gekennzeichnet, dass** die zweite Komponente ausgewählt aus der Gruppe der Granulate auf Basis von pyrogen hergestelltem Siliciumdioxid sich in mindestens einem physikalisch-chemischen Kenndaten von der ersten Komponente unterscheidet.

7. Zusammensetzung nach Anspruch 6, **dadurch gekennzeichnet, dass** die zweite Komponente ausgewählt aus der Gruppe der Granulate auf Basis von pyrogen hergestelltem Siliciumdioxid eine Stampfdichte von 80 g/l - 250 g/l, vorzugsweise 100 g/l - 250 g/l aufweist.

8. Zusammensetzung nach einem der Ansprüche 6 - 7, **dadurch gekennzeichnet, dass** die Granulate einen mittleren Partikeldurchmesser (dso) von > 200 µm, bevorzugt 250 µm - 1000 µm, aufweist.

9. Zusammensetzung nach einem der Ansprüche 6 - 8, **dadurch gekennzeichnet, dass** die Granulate einen Porenvolumen von 2,0 - 4,0 ml/g (d< 4 µm), bestimmt mittels Hg-Porosimeter, aufweist.

10. Zusammensetzung nach einem der Ansprüche 6 - 9, **dadurch gekennzeichnet, dass** der Kohlenstoffgehalt der zweiten Komponente ausgewählt aus der Gruppe der Granulate auf Basis von pyrogen hergestelltem Siliciumdioxid 0,5 Gew.-% - 10 Gew.- % beträgt.

11. Zusammensetzung nach einem der Ansprüche 6 - 10, **dadurch gekennzeichnet, dass** die Methanolbenetzbarkeit der zweiten Komponente ausgewählt aus der Gruppe der Granulate auf Basis von pyrogen hergestelltem Siliciumdioxid größer als 50 Vol.% Methanol ist.

12. Zusammensetzung nach einem der vorgenannten Ansprüche, **dadurch gekennzeichnet, dass** der Kohlenstoffgehalt der ersten Komponente 0,5 Gew.-% - 10 Gew.-% beträgt.

13. Zusammensetzung nach einem der vorgenannten Ansprüche, **dadurch gekennzeichnet, dass** die Methanolbenetzbarkeit der ersten Komponente größer als 50 Vol.% Methanol ist.

14. Zusammensetzung nach einem der vorgenannten Ansprüche, **dadurch gekennzeichnet, dass** das Gewichtsverhältnis der ersten Komponente zu der zweiten Komponente von 1 : 10 bis 10 : 1, bevorzugt 1 : 8 bis 8 : 1, besonders bevorzugt 1 : 4 bis 4: 1, beträgt.

15. Zusammensetzung nach einem der vorgenannten Ansprüche, **dadurch gekennzeichnet, dass** sie ein Bindemittel ausgewählt aus der Gruppe bestehend aus (Meth)acrylate, Alkydharze, Epoxidharze, Gummi Arabicum, Kasein, Pflanzenöle, Polyurethane, Silikonharze, organomodifizierte Silikonhybridharze, Wachs, Polyester, Vinylharze, Cellulosederivate, Kieselsol, Wasserglas und Mischungen davon aufweist.

16. Zusammensetzung nach einem der vorgenannten Ansprüche, **dadurch gekennzeichnet, dass** sie gegebenenfalls noch Filmbildemittel, Pigmente, Füllstoffe, Verdickungsmittel, Fasern, Dispergiermittel, Netzmittel, Konservierungsmittel, Emulgatoren, Schutzkolloide und/oder Entschäumer enthält.

17. Verfahren zur Herstellung einer härtbaren Zusammensetzung, die zur Herstellung von Beschichtungen zur thermischen oder akustischen Isolierung geeignet ist, bei dem eine Mischung hergestellt wird, enthaltend
- mindestens ein wässriges Bindemittel,
- eine erste Komponente basierend auf sprühgetrocknete pyrogene Siliziumdioxidgranulate,
- mindestens eine zweite Komponente ausgewählt aus der Gruppe bestehend aus Siliziumdioxide, bevorzugt Mikrosilica, Granulate auf Basis von pyrogen hergestelltem Siliciumdioxid, Silica-Aerogele, Silikatglas (Schaumglas / Blähglas), hohle Siliziumdioxidpartikel (Hohlglaskugeln), oder Granulate ausgewählt aus der Gruppe der Perlite, vorzugsweise expandierter Perlite, aus der Gruppe der Vermiculite und aus der Gruppe der Polymere, vorzugsweise expandierter Polystyrolgranulate, sowie deren Mischungen,
- optional der Mischung anschließend noch Filmbildemittel, Pigmente, Füllstoffe, Verdickungsmittel, Fasern, Schutzkolloide, Dispergiermittel, Netzmittel, Konservierungsmittel und/oder Entschäumer zugesetzt werden können.

18. Verfahren gemäß Anspruch 17, **dadurch gekennzeichnet, dass** die erste Komponente physikalisch-chemische Kenndaten gemäß Ansprüche 2 - 5, 12 und/oder 13 aufweist.

19. Verfahren gemäß Anspruch 17, **dadurch gekennzeichnet, dass** die zweite Komponente ausgewählt aus der Gruppe der Granulate auf Basis von pyrogen hergestelltem Siliciumdioxid physikalisch-chemische Kenndaten gemäß einem der Ansprüche 6 - 11 aufweist.

20. Verfahren nach einer der Ansprüche 17 - 19, **dadurch gekennzeichnet, dass** das Gewichtsverhältnis der ersten Komponente zu der zweiten Komponente von 1 : 10 bis 10 : 1, bevorzugt 1 : 8 bis 8 : 1, besonders bevorzugt 1 : 4 bis 4: 1, beträgt.

21. Verwendung der ersten Komponente nach einem der Ansprüche 2 - 5, 12 - 13 als Zusatzstoff in Beschichtungszusammensetzung zur Herstellung von Beschichtungen zur thermischen, elektrischen oder akustischen Isolierung.

22. Beschichtungen, Lacke, Farben, Tinten, Überzüge, Dichtungsmassen, Klebstoffe erhältlich durch Verwendung einer Zusammensetzung nach einem der vorgenannten Ansprüche 1 - 16.
